# EUROPEAN PATENT APPLICATION

(11) **EP 2 965 858 A1**
(43) Date of publication of application: **13.01.2016**
(21) Application number: 14468004.8
(22) Date of filing: 11.07.2014
(51) Int. Cl.: B23K 37/00, B23K 20/12

(54) **Real-time tool breakage detection during the friction stir welding process**

(71) Applicant: NELA Razvojni center d.o.o. Podruznica Vincarje, 4220 Skofja Loka (SI)
(72) Inventor: Muhic, Tadej, 8000 Novo mesto (SI); Kumer, Miha, 1000 Ljubljana (SI); Podlipnik, Gregor, 4220 Skofja Loka (SI); Megusar, Andrej, 4227 Selca (SI)
(74) Representative: Macek, Gregor

(57) **Abstract**

The present invention provides a novel method and system for tool breakage detection during the friction stir welding procedure on an automated friction stir welding machine. The object of this invention is the integration of an accelerometer sensor which detects tool breakage events in real time and triggers a preprogrammed reaction of CNC controller. In this way, a complete destruction of welding tool is prevented. Another object of the present invention is to provide an automatic reaction of CNC controller that is triggered by an error signal and consequently prevents N.O.K parts with welding faults from entering further production steps.

## Description

### FIELD OF INVENTION

The field of invention is friction stir welding technology (FSW). This disclosure generally relates to an automated process and equipment for FSW and deals more particularly with a system for the detection of tool breakage events and reaction thereto.

### BACKGROUND OF INVENTION

Friction stir welding (FSW) process belongs to the category of solid-phase joining methods. This means that only downward pressure and rotating action of the welding tool is used for the welding process. The welding tool consists of a pin part that has a special helical structure and is pressed inside the material being joined under rotating motion and thus producing frictional heat between the tool surface and the work piece. Furthermore, rotating motion of the pin induces mixing and displacement of material in the weld region. A shoulder part of FSW tool assists in intermixing the plasticized region, pushing the material downwards and preventing the displaced material from moving out of the tool region.

Due to applied mechanical deformation and rotating action of the welding tool, the material inside the weld region of two welded members is pressured and stirred together along the entire length of the seam. In this way a permanent weld is created.

The FSW process has many advantages and can be applied for various materials types, especially for combining two materials of different type. A detailed description of the FSW process is found in European patent application EP0752926 B1.

Many solutions for assuring weld quality with different sensor types are described in different patent applications. Numerous references describe FSW systems equipped with sensors for monitoring and controlling the FSW process parameters in order to achieve high-quality welds. U.S. Pat. No. 5,893,507 and International Patent Application No. WO 00/02704, for example, describe FSW systems that monitor and/or control pressure at the FSW tool tip using pressure sensors. U.S. Pat. No. 6,050,475 describes a method of maintaining constant pressure at the FSW tool tip by using the current of a drive motor to estimate the actual pressure. U.S. Pat. No. 6,299,050 describes a FSW system that monitors and controls the distance between the FSW tool and the work piece by using a sensor just ahead of the moving FSW tool. International Patent Application No. WO 98/13167 describes a FSW system that uses an ultrasonic device to measure variations in the thickness of the work pieces in order to control the distance between the FSW tool and the work pieces.

Other more complex solutions for gathering multiple welding parameter and automatic real time correction data based on pre-set logic are described in US 8,544,714 B1, US 7,992,761 B2, US 8,556,156 B1, EP2094428, WO 2012/133411 and DE 102005 032 170 A1.

Even when the FSW process parameters are monitored and controlled, a certain number of defects will be present. Different destructive and non-destructive tests must be implemented in the serial production for detection of such defects, including both offline tests, i.e. after welding, and online tests, i.e. during welding.

The most critical welding defect, which always results in weld fracture, is an insufficient depth of the weld due to the fracture of the welding tool (pin) during the welding procedure.

This effect is hardly noticeable from the appearance of the weld surface. The dimension of the weld assured through tool integrity is a key characteristic for controlling the weld quality.

None of the presented solutions deal directly with the detection of tool breakage during the FSW process combined with tool integrity verification by means of an accelerometer sensor. Some solutions for tool breakage detection in cutting applications using acceleration sensors are described in US 4,918,427 and US 4,636,779. In particular, none of the presented inventions deals with the prevention of total destruction of the upper part of the tool, i.e. the shoulder, resulting from the breakage of the lower part of the tool, i.e. pin, during FSW.

There therefore exists a need to develop an online technique for immediate determination of tool breakage during FSW process and to develop an automatic reaction to a tool breakage alarm. Secondly, there exists a need to develop an automatic sub-program execution upon the occurrence of pieces with broken tools and consequent weld defects. Embodiments of the disclosure are directed towards satisfying this need.

### BRIEF SUMMARY OF INVENTION

### Problem to be solved by the invention

An object of present invention is to provide a solution for real-time detection of tool breakage using an acceleration sensor and to provide a logic reaction of CNC-controller to prevent further damage to the upper part of the tool (shoulder) due to the destruction of the lower part of the tool (pin).

Another object of present invention is to provide a logic reaction of a CNC controller to a tool breakage fault in order to prevent N.O.K. parts from entering further production steps.

### DESCRIPTION OF THE DRAWINGS

FIG 1 presents an isometric illustration of a FSW machine with an integrated accelerometer sensor
FIG 2 presents a schematic perspective and cross-sectional view B-B of the progress of the tool in a tool breakage incident: a) Presentation of FSW process with a structurally intact tool; b) Presentation of FSW process upon pin breakage; c) Presentation of FSW process upon pin breakage and consequent destruction, i.e. deformation, of the shoulder part of the tool after crossing the area where the broken-off pin material is located (Prior art)
FIG 3 presents an isometric illustration of FSW machine's reaction following the identification of a tool breakage
FIG 4 presents tool breakage vibration signature readings and preset alarm limits
FIG 5 presents a schematic perspective and cross-sectional view B-B of the progress of the tool upon a tool breakage incident with implemented accelerometer sensor and reaction logic: a) Presentation of FSW process upon pin breakage; b) Reaction of CNC controller after the identification of a tool breakage incident
FIG 6 presents a schematic and cross-sectional view of a welding tool assembly for the FSW process

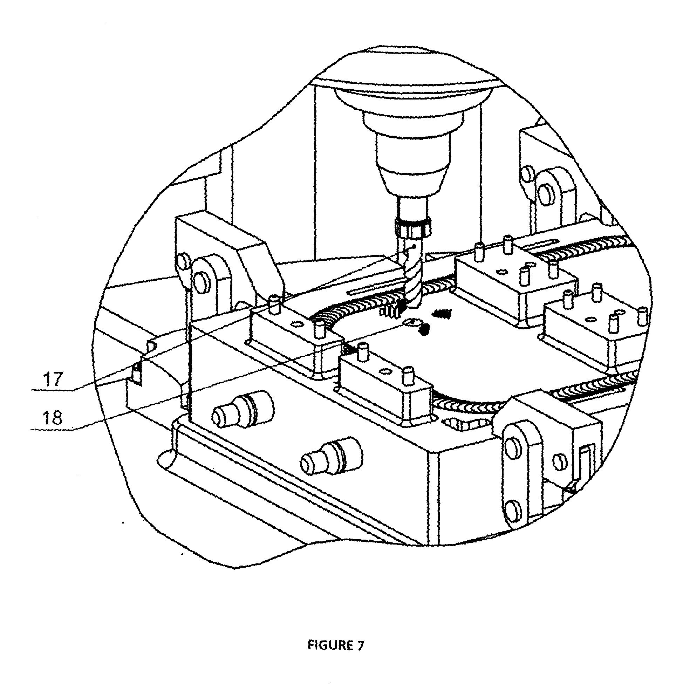

FIG 7 presents an isometric illustration of a FSW machine during the procedure of drilling through the piece with a broken pin inside the welding trajectory to prevent a N.O.K. piece from entering further production steps.

### DETAILED DESCRIPTION OF THE INVENTION

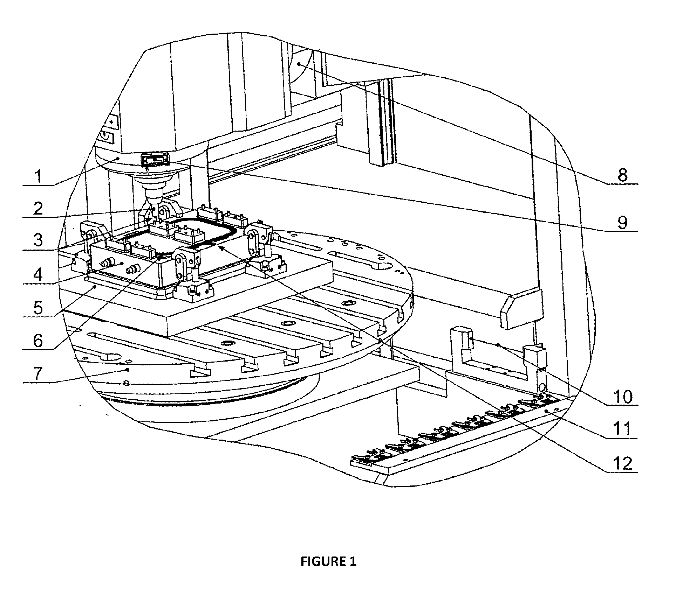

The present invention provides a novel online tool verification technique for detecting tool breakage through measurement with a multi-axis accelerometer sensor. Figure 1 illustrates different components of FSW machine. The FSW machine is based on a modified CNC-milling center with spindle head 1, rotary table 7 and swivel head 8, combined with x-, y- and z-axes to enable five-axis welding procedures. A conventional laser measurement device 10 for verifying the tool breakage is stationed near the tool magazine 11. A multi-axis accelerometer sensor 9 of present invention is mounted on the spindle head 1. The FSW welding process uses a specially designed welding tool assembly of a shoulder 2 and a pin 3. On the machine rotary table 7, a clamping device 5 is positioned. Two pieces which are welded together to form a cooler assembly 4 are positioned on the clamping device 5. A cooler assembly 4 with its two pieces to be welded together is only used as an example of the use of this invention.

For the weld quality assurance in serial welding production, it is very important to maintain control over the designed length H of pin 3. The designed length H of pin 3 assures the penetration depth H₁ and consequently weld dimensions which assure the designed strength of the weld. The welding tool, especially its part called pin 3, is subjected to high stresses generated during the tool's travel across the welding trajectory. In the serial production, tools' parts called pin 3 randomly break after a certain quantity of welded parts.

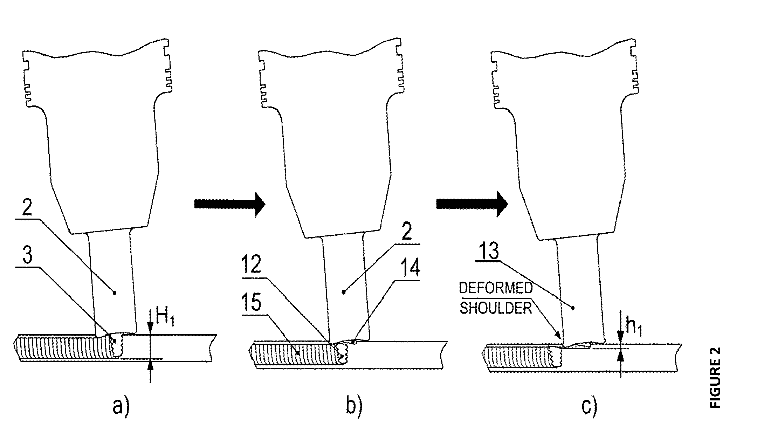

Figure 2 presents different position steps in a tool breakage incident. Figure 2a presents a structurally intact tool assembly of shoulder 2 and pin 3 during the welding procedure in a cross-sectional view.

Figure 2b shows the tool upon a pin 3 breakage occurrence. Part 12 of a broken pin 3 stays inside the weld region 15. The welding process continues with remains 14 of the broken pin 3 and shoulder 2.

Without integrating an online acceleration measurement procedure, a tool breakage cannot be identified and the welding process continues along the preprogrammed welding trajectory. Part 12 of broken pin 3 stays inside the weld region and presents a hard inclusion. As the tool progresses across the weld trajectory, as shown in Figure 2c, the upper part of the tool named shoulder 2 also passes across part 12 of broken pin 3, consequently causing deformation 13 of shape of the tool's shoulder 2. This results in a complete destruction of both parts, the tool shoulder 2 and the pin 3. Consequently, the designed welding depth H₁ is reduced to welding depth h₁.

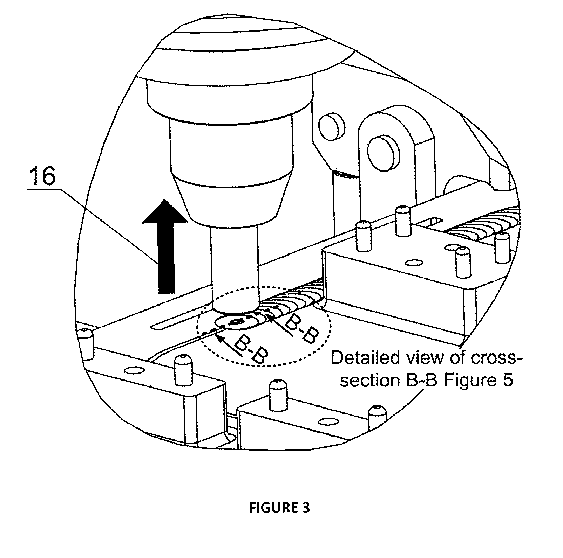

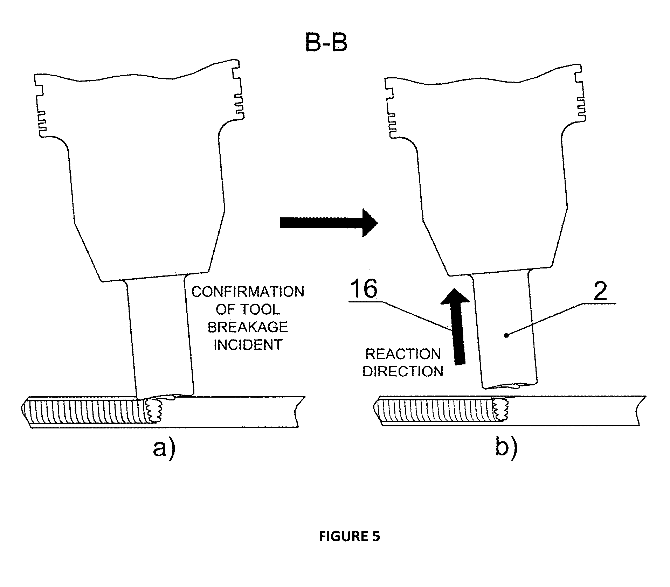

In Figure 1, a solution according to the present invention is presented. A multi-axis accelerometer sensor 9, which detects acceleration amplitude in three directions x, y and z, is mounted on the spindle head 1. By measuring acceleration, tool breakage can be identified in real time. The accelerometer sensor 9 is integrated in a CNC controller in such a way that as the preset threshold of the acceleration is reached in respective axes, the controller reacts in the real time. As shown in Fig. 3, the welding program is immediately interrupted in the position of the tool breakage incident. The CNC controller reacts with a preprogrammed reaction and the welding tool is moved in reaction direction 16. This means that the CNC-welding program stops upon the execution of controller reaction in all axes except in the z-axis at the position of tool breakage occurrence as the FSW tool loses contact with the weld piece. This reaction logic prevents destruction of the shoulder's form due to a contact with an inclusion formed by part 12 of the broken pin 3, as shown on Fig. 5.

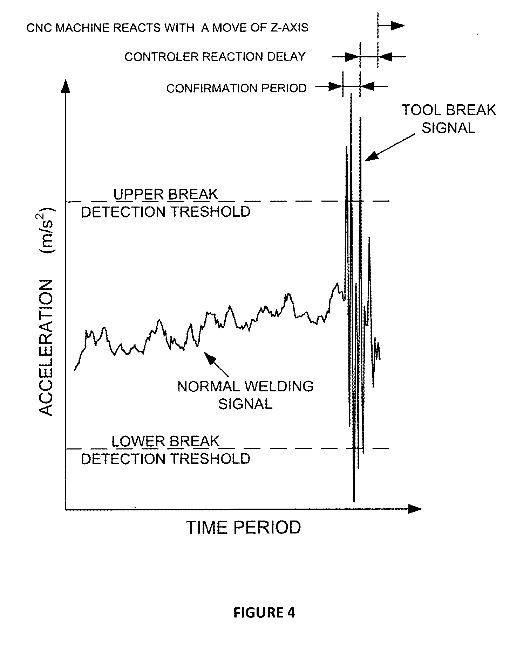

Figure 4 presents vibration signals on x-axis upon tool breakage. To correctly set up the operation of the acceleration sensor 9, the signals must be monitored and recorded during the normal welding procedure. Based on the vibration noise measured during the welding procedure, the lower and upper amplitude threshold can be set. Upon identification of a high-amplitude noise spike above the amplitude threshold, a timed confirmation logic is deployed. During the confirmation period, the recognition logic continuously checks for signal samples above the amplitude threshold, and a tool breakage alarm is generated if a preset number of above-threshold samples is counted before the confirmation period ends. The acoustic signature of tool breakage in FSW process incident is significant and detectable in the measured direction. The noise amplitude upon tool breakage threshold is approximately three times higher compared to the noise of a normal process.

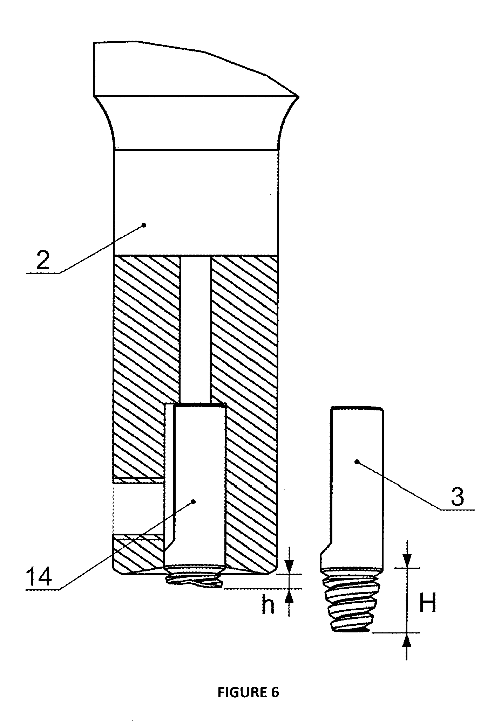

Fig. 6 presents the design of an assembly of a welding tool. The design of welding tool assembly is done in a way that after a pin 3 breakage event, followed by a preprogrammed reaction, the form of shoulder 2 stays intact and only the broken pin, i.e. pin with remains 14, can be exchanged with a new pin 3.

The present invention reduces costs for tools manufacturing, enables the usage of different materials with different properties for pin and shoulder, and shortens the time for tool integrity verification between work pieces after the identification of a tool breakage.

The invention also relates to automatic reaction logic of a CNC controller after the confirmation of a tool breakage. After the identification of tool breakage, the welding tool is deposited in a tool magazine 11. A drill tool 17 is then taken from the tool magazine and a hole 18 is drilled to identify the piece as N.O.K. In that way, a N.O.K. piece with a defective weld region characteristically differs from O.K. pieces with an adequate weld region. Upon subsequent weld surface machining, the hard inclusion remains of the pin material inside the weld region cannot destroy the milling tools. In an application of welding of cooler assembly, the N.O.K. parts will not pass the tightness test because of a hole drilled through a cooling channel.

## Claims

1. Real time tool breakage detection during a friction stir welding process on an automated 5-axis CNC machine, **characterized in that** the detection of a tool breakage event is performed during the FSW process by measuring the acceleration amplitude in three directions x, y and z using a multi-axis accelerometer sensor (9) mounted on the spindle head (1) to identify high amplitude noise spikes.

2. Real-time tool breakage detection according to claim 1, **characterized in that** the identification of a high amplitude noise spike above a preset acceleration amplitude threshold triggers the timed confirmation logic and during the confirmation period, the recognition logic continuously checks for signal samples above the amplitude threshold, and a tool breakage alarm is generated if a preset number of above-threshold samples are counted before the confirmation period ends.

3. Real-time tool breakage detection according to claim 1 and 2, **characterized in that** when a preset threshold of the acceleration amplitude in respective axes is reached, the CNC controller reacts with a preprogrammed action in real time and the welding tool is moved in a reaction direction (16), and the marking of N.O.K. welded pieces is performed by drilling a hole in the same.
